# EUROPÄISCHE PATENTSCHRIFT

(11) **EP 4 423 473 B1**
(45) Veröffentlichungstag und Bekanntmachung des Hinweises auf die Patenterteilung: **22.07.2026**
(21) Anmeldenummer: 23704056.3
(22) Anmeldetag: 19.01.2023
(51) Int. Cl.: G01M 3/28, G01M 5/00, E03B 7/00, E03B 7/07, F17D 5/06, G01M 3/18, G05B 13/00

(54) **VORRICHTUNG UND VERFAHREN ZUR DETEKTION VON ÄNDERUNGEN EINES WERTES EINER PHYSIKALISCHEN GRÖSSE**
DEVICE AND METHOD FOR DETECTING CHANGES IN A VALUE OF A PHYSICAL QUANTITY
DISPOSITIF ET PROCEDE DE DETECTION DE CHANGEMENTS DANS UNE VALEUR D'UNE GRANDEUR PHYSIQUE

(30) Priorität: 26.01.2022 DE 102022200869
(43) Veröffentlichungstag der Anmeldung: 04.09.2024
(73) Patentinhaber: Siemens Aktiengesellschaft, 80333 München (DE)
(72) Erfinder: KLEHR, Stefan, 76764 Rheinzabern (DE); VON DOSKY, Stefan, 76149 Karlsruhe (DE); BURCKHARDT, Rico, 76877 Offenbach (DE)
(74) Vertreter: Siemens Patent Attorneys
(86) Internationale Anmeldenummer: PCT/EP2023/051262
(87) Internationale Veröffentlichungsnummer: WO 2023/144009

(56) Entgegenhaltungen:
- DE-B3- 102005 023 692
- ALIPPI C ET AL: "An Adaptive Sampling Algorithm for Effective Energy Management in Wireless Sensor Networks With Energy-Hungry Sensors", IEEE TRANSACTIONS ON INSTRUMENTATION AND MEASUREMENT, IEEE, USA, vol. 59, no. 2, 1 February 2010 (2010-02-01), pages 335 - 344, XP011295116, ISSN: 0018-9456

## Beschreibung

Die Erfindung betrifft eine Vorrichtung zur Detektion von Änderungen eines Wertes einer physikalischen Größe. Außerdem betrifft die Erfindung ein Detektionssystem, ein Verfahren zur Detektion von Änderungen eines Wertes einer physikalischen Größe, eine Verwendung einer Vorrichtung und ein Computerprogrammprodukt.

In Rohrleitungsnetzen, wie beispielsweise im Bereich der Trinkwasserversorgung, besteht die Gefahr von Rohrbrüchen aufgrund von Druckstößen, die aufgrund der Fluiddynamik entstehen können. Diese Problematik tritt vergleichsweise häufig auf, so dass Trinkwasserversorgungsunternehmen ein besonderes Interesse haben, Druckstoßereignisse zu detektieren und insbesondere einen möglichen Rohrbruch zu lokalisieren.

Um Druckstöße zu vermeiden oder wenigstens deren Intensität abzuschwächen, ist es bekannt, an verschiedenen Stellen im Rohrleitungsnetz sogenannte mechanische Wasserschlagdämpfer einzusetzen. Beispielsweise offenbaren die DE 617 502 C oder die EP 0 507 705 A1 derartige Vorrichtungen. Die Wasserschlagdämpfer können Druckstöße zwar dämpfen, jedoch können sie keine Informationen über die Druckstoßereignisse bereitstellen.

Um die schädlichen Auswirkungen der Druckstöße zu begrenzen, können im Rahmen der Planung und des Aufbaus von Rohrleitungsnetzen vorher berechnete Parameter hinsichtlich Materialauswahl und Wandstärke der Rohrleitungen berücksichtigt werden, um Rohrbrüchen vorzubeugen. Diese Vorgehensweise ist in den meisten Fällen jedoch nicht praktikabel, zumal Alterungsprozesse wie Korrosion hierbei unberücksichtigt bleiben.

Es ist auch möglich, Drucksensoren im Rohrleitungsnetz zu verteilen und so die Druckzustände kontinuierlich zu überwachen. Aufgrund der hierfür erforderlichen kontinuierlichen Druckmessung muss für jede Messstelle eine adäquate Energieversorgung bereitgestellt werden, was bei der beträchtlichen Länge von Rohrleitungsnetzen (speziell im Trinkwasserversorgungsbereich) einen hohen Energie- und Materialaufwand mit sich bringt. Zudem ist ein verteiltes Sensornetzwerk nur praktikabel, wenn die Sensoren drahtlos betrieben werden. Eine ständige Druckmesswerterfassung verbraucht zudem relativ viel Energie, was die Batterielaufzeit wiederum stark einschränkt.

In der DE 7 040 823 U und in der DE 6 911 897 U ist jeweils ein Druckschalter mit Schaltpunkteinstellung zur Erfassung eines Druckwerts eines Fluids offenbart.

In der DE 582 011 A ist ein Druckschalter offenbart, der bei Überschreiten eines gewissen Druckschwellwertes eines Fluids einen elektrischen Kontakt schließt, um beispielsweise den Kühlvorgang eines Kühlschranks zu unterbrechen.

In der EP 3 588 042 A1 ist ein Druckelement zur Überwachung eines das Druckelement beaufschlagenden Fluids offenbart. Das Druckelement ist dabei dazu ausgebildet, einen elektrischen Schaltkreis, bedingt durch eine Änderung eines Drucks, den das Fluid auf das Druckelement ausübt, unabhängig von einem Absolutwert des Drucks zu schließen. Dieser elektrische Schaltkreis fungiert dabei als Trigger für einen nachgelagerten Drucksensor. Das Druckelement dient jedoch nur der Erkennung von relativ großen Druckänderungen.

Die DE 10 2005 023692 B3 offenbart eine Drucksensorgruppe mit zwei Drucksensoren mit einem Lecküberwachungsrechner.

Der Erfindung liegt die Aufgabe zugrunde, eine Erfassung von Änderungen eines Wertes einer physikalischen Größe zu ermöglichen, die eine hohe Genauigkeit bei einem zugleich geringen Energieaufwand ermöglicht.

Diese Aufgabe wird gelöst durch eine Vorrichtung zur Detektion von Änderungen eines Wertes einer physikalischen Größe nach Anspruch 1. Außerdem wird die Aufgabe gelöst durch eine Rohrleitung, die von einem Fluid durchströmbar ist, nach Anspruch 7. Zudem wird die Aufgabe gelöst durch ein Detektionssystem nach Anspruch 9. Außerdem wird die Aufgabe gelöst durch ein Verfahren zur Detektion von Änderungen eines Wertes einer physikalischen Größe nach Anspruch 10. Zudem wird die Aufgabe gelöst durch die Verwendung einer Vorrichtung nach Anspruch 12 und ein Computerprogrammprodukt nach Anspruch 13. Vorteilhafte Weiterbildungen ergeben sich aus den abhängigen Ansprüchen.

Eine erfindungsgemäße Vorrichtung zur Detektion von Änderungen eines Wertes einer physikalischen Größe weist die folgenden Teile auf:
- ein erstes Bauteil, welches dazu ausgebildet ist, bei einem Überschreiten eines Schwellwertes einer Änderungsrate des Wertes der physikalischen Größe ein erstes Ausgangssignal zu erzeugen,
- ein zweites Bauteil, welches dazu ausgebildet ist, den Wert der physikalischen Größe zu ermitteln und ein entsprechendes zweites Ausgangssignal zu erzeugen, und
- eine Steuereinheit, die einen Mikroprozessor, der zum Abarbeiten vorgegebener Befehle ausgebildet ist, einen Speicher und eine Energieversorgung, die zu einer Versorgung des zweiten Bauteil mit Energie ausgebildet ist, aufweist, wobei die Steuereinheit mit dem ersten Bauteil und dem zweiten Bauteil kabelgebunden oder kabellos verbunden und dazu ausgebildet ist, das erste Ausgangssignal und das zweite Ausgangssignal auszulesen.

Die Steuereinheit ist dabei dazu ausgebildet, den Wert der physikalischen Größe mit einer anpassbaren Messrate zu erfassen, indem die Steuereinheit das zweite Bauteil entsprechend der vorgesehenen Messrate mit Energie versorgt. Weiterhin ist die Steuereinheit dazu ausgebildet, den über das zweite Ausgangssignal erfassten Wert jeweils in dem Speicher der Steuereinheit zu hinterlegen. Darüber hinaus ist die Steuereinheit dazu ausgebildet, in Reaktion auf das Empfangen des ersten Ausgangssignals unverzüglich und unabhängig von der aktuell vorgesehenen Messrate das zweite Bauteil mit Energie zu versorgen, um einen aktuellen Wert der physikalischen Größe über das zweite Ausgangssignal zu erfassen und in dem Speicher zu hinterlegen. Mit dem Begriff "einen aktuellen Wert" ist gemeint, dass dieser nicht nur zu einem einzigen Zeitpunkt ermittelt werden muss, sondern auch über einen definierten Zeitbereich hinweg - beispielsweise, bis das Kriterium der Schwellwertüberschreitung wieder weggefallen ist. Es kann sich demnach bei dem "aktuellen Wert" im eigentlichen Sinn auch um einen Werteverlauf handeln.

Die erfindungsgemäße Vorrichtung kann in vorteilhafter Weise mit einer vorgegebenen Messrate über das zweite Bauteil einen aktuellen, absoluten Messwert der physikalischen Größe ermitteln und zur weiteren Verarbeitung in einem Speicher hinterlegen. Diese (absolute) Messung kann besonders stromsparend vorgenommen werden, wenn eine niedrige Messrate (in Messungen pro Zeiteinheit) gewählt wird und wenn in der Zeit der Messpause das zweite Bauteil nicht mit Energie versorgt wird. Ein langsamer Abfall oder eine Zunahme der physikalischen Größe können damit zuverlässig und mit geringer Energie detektiert werden.

Für eine Detektion von vergleichsweise schnellen Änderungen der physikalischen Größe kann die alleinige Nutzung des zweiten Bauteils nicht ausreichend sein, da unter Umständen aufgrund einer relativ groß vorgegebenen Messrate die Messung der physikalischen Größe zeitlich zu ungenau ist, d.h. die Messrate zu gering gewählt sein kann. Die Steuereinheit der erfindungsgemäßen Vorrichtung ist daher mit einem weiteren Bauteil (dem ersten Bauteil) verbunden, welches dazu ausgebildet ist, bei einem Überschreiten eines Schwellwertes einer Änderungsrate des Wertes der physikalischen Größe ein erstes Ausgangssignal zu erzeugen. Mit anderen Worten ist das erste Bauteil dazu in der Lage, eine relative Änderung der physikalischen Größe direkt, d.h. ohne eine nachgelagerte Berechnung von Differenzwerten zu benötigen, zu erfassen und infolgedessen ein Signal an die Steuereinheit weiterzuleiten. In Reaktion auf das von dem ersten Bauteil empfangenen Signal kann die Steuereinheit das zweite Bauteil unmittelbar mit Energie versorgen, um (früher als durch die vorgegebene Messrate vorgesehen) einen aktuellen Wert der physikalischen Größe zu erfassen. Das erste Bauteil dient daher der Erfassung von relativ schnellen Änderungen der physikalischen Größe.

Die erfindungsgemäße Vorrichtung vereint in vorteilhafter Weise eine zeitlich fein auflösbare Erfassung eines Wertes einer physikalischen Größe mit einem minimalen Energieaufwand.

Die Steuereinheit ist dazu ausgebildet, die Messrate beim Überschreiten eines Schwellwertes einer Änderungsrate zuvor erfasster und in dem Speicher hinterlegter Werte der physikalischen Größe anzupassen. Mit anderen Worten passt die Steuereinheit die Änderungsrate bedingt durch das Überschreiten eines Schwellwertes der Änderungsrate der in dem Speicher der Steuereinheit hinterlegten historischen Werte der physikalischen Größe an. Die aktuelle Änderungsrate kann dabei unter Nutzung geeigneter Algorithmen vorteilhafterweise durch die Steuereinheit selbst bestimmt und mit dem Schwellwert vergleichen werden. Es ist aber auch möglich, dass eine externe, ausgelagerte Recheneinheit diese Aufgabe übernimmt und dabei die Steuereinheit ggf. auf das Überschreiten des Schwellwertes hinweist. Wird so beispielsweise eine hohe aktuelle Änderungsrate erkannt, kann die Steuereinheit die Messrate erhöhen, um die physikalische Größe zeitlich genauer auflösen zu können, wodurch sich bestimmte Charakteristiken der physikalischen Größe ggf. besser erkennen lassen.

Im Rahmen einer vorteilhaften Weiterbildung der Erfindung ist die Vorrichtung dazu ausgebildet, die in dem Speicher hinterlegten Werte der physikalischen Größe zu vorgegebenen Zeitpunkten und/oder auf Anfrage an eine übergeordnete Auswerteeinheit zu übertragen, insbesondere an eine cloudbasierte Auswerteeinheit.

Das erste Bauteil kann dazu ausgebildet sein, bei dem Überschreiten des Schwellwertes der Änderungsrate des Wertes der physikalischen Größe aufgrund einer durch die physikalische Größe auf das erste Bauteil bewirkte Krafteinwirkung eine elektrische Spannung als das erste Ausgangssignal zu erzeugen. Diese Spannung kann dann als Eingangssignal einer speziellen Trigger-Elektronik verwendet werden, welche ein Triggersignal erzeugt und an die Steuereinheit überträgt. Das Triggersignal kann daraufhin bei der Steuereinheit einen Hardware-Interrupt auslösen, wodurch die Steuereinheit über das Auftreten der Schwellwertüberschreitung informiert wird.

Bei einer vorteilhaften Weiterbildung der Erfindung der Schwellwert der Änderungsrate des Wertes der physikalischen Größe fünf bar pro Sekunde beträgt, wobei die physikalische Größe einen Druck, insbesondere einen Druck eines Fluids in einer Rohrleitung, darstellt. Das erste Bauteil kann dabei vorteilhafterweise ringförmig ausgebildet sein. Das erste Bauteil kann bevorzugt ein sich gemäß dem piezoelektrischen Effekt verhaltenden Material umfassen, welches auf das Ausüben einer Kraft, die durch die Druckänderung bedingt ist, mit dem Anfallen einer elektrischen Spannung reagiert. Ein solches Material ist dabei ferroelektrisch und weist einen permanenten elektrischen Dipol auf.

Das zweite Bauteil stellt vorteilhafterweise einen Drucksensor dar, der zur Erfassung eines Drucks als physikalischem Wert dient.

Die Steuereinheit kann zusätzlich zu der Detektion der Druckänderung einen exakten Zeitstempel des Änderungsereignisses zur Verfügung stellen und Sensoren zur Erfassung von Temperatur, Feuchte, Vibration, Helligkeit und dergleichen aufweisen.

Die zuvor erläuterte Aufgabe wird gleichfalls von einer Rohrleitung gelöst. Diese Rohrleitung ist von einem Fluid durchströmbar, wobei die Rohrleitung wenigstens eine Vorrichtung wie zuvor erläutert aufweist, wobei die Vorrichtung in der Rohrleitung derart angeordnet ist, dass das erste Bauteil eine Änderungsrate eines Druck des Fluids und das zweite Bauteil den Wert des Druckes des Fluides in der Rohrleitung erfassen können. Bei dieser Rohrleitung kann besonders vorteilhaft eine Druckänderung des Fluiddrucks festgestellt werden, woraufhin entsprechende Maßnahmen eingeleitet werden können, um der Druckänderung zu begegnen. Bevorzugt weist die Rohrleitung dabei eine Vielzahl von solchen Vorrichtungen auf, wie sie vorstehend erläutert wurden. Dadurch wird ermöglicht, dass die Druckänderung örtlich aufgelöst festgestellt werden kann, um die Einleitung möglicher Gegenmaßnahmen effizienter und schneller vornehmen zu können.

Auch wird die Aufgabe von einem Detektionssystem gelöst, welches eine Vielzahl von Vorrichtungen wie zuvor erläutert umfasst, die mit einer oder mehreren übergeordneten Auswerteeinheiten verbunden sind, wobei die Vorrichtungen vorzugsweise in einer Rohrleitung angeordnet sind.

Die zuvor erläuterte Aufgabe wird zudem von einem Verfahren zur Detektion von Änderungen eines Wertes einer physikalischen Größe mit einer Vorrichtung, die Vorrichtung umfassend:
- ein erstes Bauteil, welches dazu ausgebildet ist, bei einem Überschreiten eines Schwellwertes einer Änderungsrate des Wertes der physikalischen Größe ein erstes Ausgangssignal zu erzeugen,
- ein zweites Bauteil, welches dazu ausgebildet ist, den Wert der physikalischen Größe zu ermitteln und ein entsprechendes zweites Ausgangssignal zu erzeugen,
- eine Steuereinheit, die einen Mikroprozessor, der zum Abarbeiten vorgegebener Befehle ausgebildet ist, einen Speicher und eine Energieversorgung, die zu einer Versorgung des zweiten Bauteil mit Energie ausgebildet ist, aufweist, wobei die Steuereinheit mit dem ersten Bauteil und dem zweiten Bauteil kabelgebunden oder kabellos verbunden und dazu ausgebildet ist, gelöst.

Das Verfahren umfasst dabei die folgenden Schritte:
- Erfassen des Wertes der physikalischen Größe mit einer durch die Steuereinheit vorgegebenen Messrate, indem die Steuereinheit das zweite Bauteil entsprechend der vorgegebenen Messrate mit Energie versorgt und den über das zweite, von dem zweiten Bauteil erzeugten Ausgangssignal erfassten Wert jeweils in dem Speicher der Steuereinheit hinterlegt,
- in Reaktion auf das Empfangen eines von dem ersten Bauteil beim Überschreiten des Schwellwertes der Änderungsrate des Wertes der physikalischen Größe erzeugten ersten Ausgangssignals, unverzüglich und unabhängig von der aktuell vorgesehenen Messrate, Versorgen des zweiten Bauteils mit Energie, um einen aktuellen Wert der physikalischen Größe über das zweite Ausgangssignal zu erfassen und in dem Speicher der Steuereinheit zu hinterlegen. Mit dem Begriff "einen aktuellen Wert" ist gemeint, dass dieser nicht nur zu einem einzigen Zeitpunkt ermittelt werden muss, sondern auch über einen definierten Zeitbereich hinweg - beispielsweise, bis das Kriterium der Schwellwertüberschreitung wieder weggefallen ist.

Die Messrate beim Überschreiten eines Schwellwertes einer Änderungsrate zuvor erfasster und in dem Speicher hinterlegter Werte der physikalischen Größe wird durch die Steuereinheit angepasst.

Die in dem Speicher hinterlegten Werte der physikalischen Größe können zu vorgegebenen Zeitpunkten und/oder auf Anfrage von der Steuereinheit an eine übergeordnete Auswerteeinheit übertragen werden, insbesondere an eine cloudbasierte Auswerteeinheit. Dabei kann beispielsweise der Standard "Narrowband IoT" zum Einsatz kommen.

Auch wird die Aufgabe von einer Verwendung einer Vorrichtung wie zuvor erläutert, vorzugsweise einer Vielzahl solcher Vorrichtungen, zur Überwachung einer fluiddurchströmten Rohrleitung gelöst.

Zudem wird die Aufgabe gelöst durch ein Computerprogrammprodukt gemäß Anspruch 13.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die im Zusammenhang mit den Figuren näher erläutert wird. Es zeigen:
- FIG 1: ein Schaubild einer erfindungsgemäßen Vorrichtung; und
- FIG 2: einen zeitlichen Verlauf eines in einer Rohrleitung gemessenen Druckes eines Fluids.

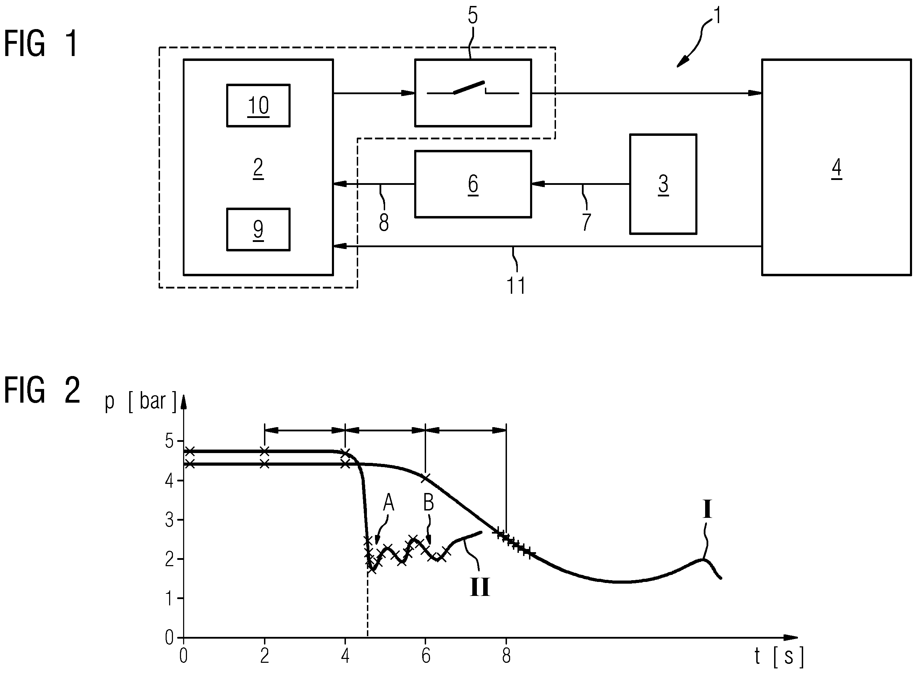

FIG 1 zeigt ein Schaubild einer erfindungsgemäßen Vorrichtung 1. Die Vorrichtung 1 umfasst eine Steuereinheit 2, ein erstes Bauteil 3, ein zweites Bauteil 4 und eine Trigger-Elektronik 6.

Das erste Bauteil 3 ist ringförmig ausgebildet und weist ein Material auf, das auf eine mechanische Kraft gemäß dem piezoelektrischen Effekt mit einer elektrischen Spannung antwortet. Dabei ist die als eine erstes Ausgangssignal 7 erzeugte Piezospannung direkt proportional mit einer Druckänderung beispielsweise eines Fluids, das durch eine Rohrleitung strömt und einen Druck auf das erste Bauteil 3 und auf das zweite Bauteil 4 ausübt. Das zweite Bauteil 4 umfasst einen Drucksensor, mit dem u.a. der Druck des Fluides ermittelbar ist, das durch die Rohrleitung (nicht dargestellt) strömt. Das erste Bauteil 3 kann direkt an das zweite Bauteil 4 angrenzend angeordnet sein.

Die Piezospannung als das erste Ausgangssignal 7 ist in die Trigger-Elektronik 6 geführt, derart, dass beim Überschreiten eines bestimmten Schwellwertes einer Druckänderung des Fluides eine derart hohe Piezospannung 7 an der Trigger-Elektronik 6 anliegt, dass die Trigger-Elektronik 6 ein Triggersignal 8 erzeugt, welches in die Steuereinheit 2 geführt ist. In der Steuereinheit löst das Triggersignal 8 einen Hardware-Interrupt aus, wodurch die Steuereinheit 2 über das Ereignis der Schwellwertüberschreitung der Druckänderung informiert wird.

Die Trigger-Elektronik 6 kann beispielsweise einen Tiefpassfilter und einen Schmitt-Trigger aufweisen, um die beschriebene Funktionalitäten bereitzustellen. Ein Stromverbrauch der Trigger-Einheit kann 3,6 Mikroampere betragen. Das erste Bauteil kann beispielsweise schnelle Drucktransienten ab einer Änderungsrate von 5 bar pro Sekunde detektieren, wobei die erzeuge Piezospannung 7 beispielsweise 20 Millivolt beträgt.

Die Steuereinheit 2 weist einen Mikroprozessor 9, der zum Abarbeiten vorgegebener Befehle ausgebildet ist, einen Speicher 10 und eine Energieversorgung 5, die zu einer Versorgung des zweiten Bauteils 4 mit Energie ausgebildet ist, auf. Die Steuereinheit 2 ist sowohl mit dem ersten Bauteil 3 als auch dem zweiten Bauteil 4 kabelgebunden oder kabellos verbunden und dazu ausgebildet, das erste Ausgangssignal 7 und ein zweites, von dem zweiten Bauteil 4 erzeugtes Ausgangssignal 11 auszulesen.

Die Steuereinheit 2 ist zudem dazu ausgebildet, den von dem zweiten Bauteil 4 gemessenen Druckwert mit einer anpassbaren Messrate zu erfassen, indem die Steuereinheit 2 das zweite Bauteil 4 entsprechend der vorgesehenen Messrate über die Energieversorgung 5 mit Energie versorgt, und den über das zweite Ausgangssignal 11 erfassten Druckwert jeweils in dem Speicher 10 der Steuereinheit 2 zu hinterlegen. Die Messrate kann beispielsweise eine Messung pro zwei Sekunden betragen. Während der Messpausen wird der Drucksensor als zweites Bauteil 4 komplett stromlos geschaltet und der Mikrokontroller 9 befindet sich in einem energiesparenden Low-Power Modus. Die Messung eines Druckwertes kann beispielsweise jeweils sieben Millisekunden dauern.

In dem Mikrocontroller 9 der Steuereinheit 2 ist ein Algorithmus hinterlegt, welche die in dem Speicher 10 hinterlegten historischen Druckwerte dahingehend überprüft, ob ein Schwellwert einer Änderungsrate der historischen Druckwerte, mit anderen Worten eine Differenz eines aktuellen zu einem vorherigen Druckwert, überschritten ist. In Folge eines solchen Überschreitens des Schwellwertes ist der Algorithmus dazu ausgebildet, die Messrate anzupassen. Wenn der erfasste Druck beispielsweise schnell abfällt, wird der Algorithmus die Messrate erhöhen, um zeitlich feiner aufgelöst die Druckwerte zu erfassen und in dem Speicher 10 zu hinterlegen. Diese Erhöhung der Messrate kann sukzessive, d.h. in kleinen Schritten erfolgen, um nicht übermäßig viel Energie zu verbrauchen.

Die Steuereinheit 2 ist weiterhin dazu ausgebildet, in Reaktion auf das Empfangen des ersten Ausgangssignals 7 unverzüglich und unabhängig von der aktuell vorgesehenen Messrate das zweite Bauteil 4 mit Energie zu versorgen, um einen aktuellen Druckverlauf mit hoher Messrate über das zweite Ausgangssignal 11 zu erfassen und in dem Speicher 10 zu hinterlegen. Bei großen, schnell erfolgenden Druckänderungen kann (somit) die Steuereinheit 2 praktisch sofort reagieren, während eine rein softwarebasierte Anpassung der Messrate verzögert vorgenommen werden würde.

FIG 2 zeigt exemplarische Druckverläufe eines Fluids in einer Rohrleitung über der Zeit. Eine erste Kurve I stellt einen tatsächlichen ersten Druckverlauf dar. Die zuvor erläuterte Steuereinheit 2 gibt eine Messrate von einer Messung pro zwei Sekunden vor, was durch die Kreuzmarkierungen in der Kurve I symbolisiert ist. Bei einem Vergleich des Druckwertes, der nach acht Sekunden gemessenen wird, mit einem Druckwert, der bei sechs Sekunden gemessen wird, stellt der Algorithmus der Steuereinheit 2 fest, dass ein bestimmter Schwellwert der Druckänderung überschritten ist. Daraufhin erhöht er die Messrate, um den (weiteren) Druckverlauf zeitlich enger zu erfassen und dadurch ein mögliches Triggerereignis mit weiteren Druckmesswerten zu bestätigen. Die Erhöhung der Messrate kann dabei schrittweise in mehreren Stufen erfolgen (z.B. 2s, 500ms, 100ms, 10ms), um möglichst schnell einen signifikanten Druckgradienten zu erfassen und als Triggerereignis softwarebasiert zu detektieren und einen Softwaretrigger auszulösen.

Der Druckgradient kann jedoch im weiteren Verlauf so schwach ausgeprägt sein, dass das Triggerkriterium (eine definierte Druckänderung muss für eine bestimmte Zeitdauer anliegen, also das Produkt Druckgradient [bar/s] * Zeitdauer [s], also dp/dt * T) nicht erfüllt ist, mit der Folge, dass kein Softwaretrigger ausgelöst wird und die Messrate wieder auf die langsamste Messrate z.B. 2s zurückgestellt wird.

Der Softwaretrigger veranlasst den Mikrocontroller 9, die Messrate für eine bestimmte, vorher festgelegte Zeitdauer von z.B. 60s zu erhöhen (z.B. auf 10ms), um den weiteren Druckverlauf mit hoher Abtastrate zu erfassen. Die hohe Abtastrate ist notwendig, um bei der Kreuzkorrelation mit den Signalverläufen von benachbarten Messstellen eine möglichst gute Ortsauflösung zu erzielen.

Die adaptive Erhöhung der Messrate dient dazu, dem Softwaretrigger möglichst schnell weitere Messwerte beizusteuern, um das definierte Triggerkriterium zu überprüfen bzw. zu verwerfen. Als Triggerkriterium kann das Produkt "Druckgradient * Dauer", (z.B. 0,1bar/s * 3s = 0,3bar) verwendet werden. Dabei ist das Kriterium auch erfüllt, wenn der Gradient größer, aber von kürzerer Dauer ist (z.B. 0,3bar/s * 1s). Kurze Ausreißer der Messwerte (z.B. Störsignale) führen dabei nicht unmittelbar zu einem Fehltrigger.

Ein Vorteil der Erfindung ergibt sich beispielsweise beim Vorliegen einer unkritischen Druckschwankung in einem Wassernetz (z.B. durch plötzliche hohe Wasserentnahme seitens der Verbraucher). In diesem Fall würde der Druck im Rohr wieder auf den Ursprungswert (über Schwellwert) ansteigen. Durch die feine Messauflösung der erfindungsgemäßen Vorrichtung 1 könnte dieser Anstieg schnell erkannt werden und das Ereignis korrekterweise als unkritisch eingeordnet werden.

Eine zweite Kurve II zeigt einen zweiten Druckwertverlauf II, der nach ca. vier Sekunden einen starken Abfall aufweist. Wäre die Vorrichtung 1 nur dazu ausgebildet, eine rein softwarebasierte Anpassung der Messrate über den Algorithmus vorzunehmen, würde dieser aufgrund der 2-sekündigen Messung den Druckabfall erst nach sechs Sekunden feststellen und die Messrate erhöhen (im Bereich B). Die erfindungsgemäße Vorrichtung 1 nutzt hier jedoch den Trigger durch das erste Bauteil 1, um im Bereich A, also beim Auftreten des Druckabfalls, schon die Messrate zu erhöhen (z.B. auf 10ms). Dadurch wird der Verlauf der Kurve II zwischen den Bereichen A und B im Gegensatz zu bislang bekannten Vorrichtungen exakt erfasst.

Die erläuterte Vorrichtung 1 ermöglicht eine stromsparende und dabei gleichzeitig in der Geschwindigkeit adaptive Detektion von Druckänderungen eines Fluides in einer Rohrleitung. Mit Verwendung der vorgeschlagenen Vorrichtung 1 und deren Daten- und Energiebedarfsreduktion kann eine Rohrbrucherkennung mit batteriebetriebenen Sensoren über viele Jahre erfolgen. Zudem ist eine präzise Leckortung durch Kreuzkorrelation (Druck-Rohdaten) möglich, die zum Zeitpunkt des Druckabfalls selektiv erfasst werden.

## Patentansprüche

1. Vorrichtung (1) zur Detektion von Änderungen eines Wertes einer physikalischen Größe in einem Rohrleitungsnetz, aufweisend:
- ein erstes Bauteil (3), welches dazu ausgebildet ist, bei einem Überschreiten eines Schwellwertes einer Änderungsrate des Wertes der physikalischen Größe ein erstes Ausgangssignal (7) zu erzeugen,
- ein zweites Bauteil (4), welches dazu ausgebildet ist, den Wert der physikalischen Größe zu ermitteln und ein entsprechendes zweites Ausgangssignal (11) zu erzeugen,
- eine Steuereinheit (2), die einen Mikroprozessor (9), der zum Abarbeiten vorgegebener Befehle ausgebildet ist, einen Speicher (10) und eine Energieversorgung (5), die zu einer Versorgung des zweiten Bauteils (4) mit Energie ausgebildet ist, aufweist, wobei die Steuereinheit (2) mit dem ersten Bauteil (3) und dem zweiten Bauteil (4) kabelgebunden oder kabellos verbunden und dazu ausgebildet ist, das erste Ausgangssignal (7) und das zweite Ausgangssignal (11) auszulesen,
wobei die Steuereinheit (2) dazu ausgebildet ist, den Wert der physikalischen Größe mit einer anpassbaren Messrate zu erfassen, indem die Steuereinheit (2) das zweite Bauteil (3) entsprechend der vorgesehenen Messrate mit Energie versorgt, und den über das zweite Ausgangssignal (11) erfassten Wert jeweils in dem Speicher (10) der Steuereinheit (2) zu hinterlegen,
**dadurch gekennzeichnet, dass**
die Steuereinheit (2) dazu ausgebildet ist, in Reaktion auf das Empfangen des ersten Ausgangssignals (7) unverzüglich und unabhängig von der aktuell vorgesehenen Messrate das zweite Bauteil (4) mit Energie zu versorgen, um einen aktuellen Wert der physikalischen Größe über das zweite Ausgangssignal (11) zu erfassen und in dem Speicher (10) zu hinterlegen,
und dass die Steuereinheit (2) dazu ausgebildet ist, die Messrate beim Überschreiten eines Schwellwertes einer Änderungsrate zuvor erfasster und in dem Speicher (10) hinterlegter Werte der physikalischen Größe anzupassen.

2. Vorrichtung (1) nach Anspruch 1, die dazu ausgebildet ist, die in dem Speicher (10) hinterlegten Werte der physikalischen Größe zu vorgegebenen Zeitpunkten und/oder auf Anfrage an eine übergeordnete Auswerteeinheit zu übertragen, insbesondere an eine cloudbasierte Auswerteeinheit.

3. Vorrichtung (1) nach einem der vorangegangenen Ansprüche, bei der das erste Bauteil dazu ausgebildet ist, bei dem Überschreiten des Schwellwertes der Änderungsrate des Wertes der physikalischen Größe aufgrund einer durch die physikalische Größe auf das erste Bauteil (3) bewirkte Krafteinwirkung eine elektrische Spannung als das erste Ausgangssignal (7) zu erzeugen.

4. Vorrichtung (1) nach Anspruch 3, bei dem der Schwellwert der Änderungsrate des Wertes der physikalischen Größe fünf bar pro Sekunde beträgt, wobei die physikalische Größe einen Druck, insbesondere einen Druck eines Fluids in einer Rohrleitung, darstellt.

5. Vorrichtung (1) nach Anspruch 3 und 4, bei der das erste Bauteil (3) ringförmig ausgebildet ist.

6. Vorrichtung (1) nach einem der vorangegangenen Ansprüche, bei der das zweite Bauteil (4) einen Drucksensor zur Erfassung eines Drucks als physikalischem Wert darstellt.

7. Rohrleitung, die von einem Fluid durchströmbar ist, und die wenigstens eine Vorrichtung (1) gemäß einem der Ansprüche 1 bis 6 aufweist, wobei die Vorrichtung (1) derart in der Rohrleitung angeordnet ist, dass das erste Bauteil (3) eine Änderungsrate eines Drucks des Fluids und das zweite Bauteil (4) den Wert des Druckes des Fluides in der Rohrleitung erfassen können.

8. Rohrleitung nach Anspruch 7, die eine Vielzahl von Vorrichtungen (1) gemäß einem der Ansprüche 1 bis 6 aufweist.

9. Detektionssystem, umfassend eine Vielzahl von Vorrichtungen (1) gemäß einem der Ansprüche 1 bis 6, die mit einer oder mehreren übergeordneten Auswerteeinheiten verbunden sind, wobei die Vorrichtungen (1) vorzugsweise in einer Rohrleitung gemäß Anspruch 8 oder 9 angeordnet sind.

10. Verfahren zur Detektion, in einem Rohrleitungsnetz, von Änderungen eines Wertes einer physikalischen Größe mit einer Vorrichtung (1), die Vorrichtung (1) umfassend:
- ein erstes Bauteil (3), welches dazu ausgebildet ist, bei einem Überschreiten eines Schwellwertes einer Änderungsrate des Wertes der physikalischen Größe ein erstes Ausgangssignal (7) zu erzeugen,
- ein zweites Bauteil (4), welches dazu ausgebildet ist, den Wert der physikalischen Größe zu ermitteln und ein entsprechendes zweites Ausgangssignal (11) zu erzeugen,
- eine Steuereinheit (2), die einen Mikroprozessor (9), der zum Abarbeiten vorgegebener Befehle ausgebildet ist, einen Speicher (10) und eine Energieversorgung (5), die zu einer Versorgung des zweiten Bauteils (4) mit Energie ausgebildet ist, aufweist, wobei die Steuereinheit (2) mit dem ersten Bauteil (3) und dem zweiten Bauteil (4) kabelgebunden oder kabellos verbunden und dazu ausgebildet ist,
das Verfahren umfassend:
- Erfassen des Wertes der physikalischen Größe mit einer durch die Steuereinheit (2) vorgegebenen Messrate, indem die Steuereinheit (2) das zweite Bauteil (4) entsprechend der vorgegebenen Messrate mit Energie versorgt und den über das zweite, von dem zweiten Bauteil (4) erzeugte Ausgangssignal (11) erfassten Wert jeweils in dem Speicher (10) der Steuereinheit (2) hinterlegt,
- in Reaktion auf das Empfangen eines von dem ersten Bauteil (3) beim Überschreiten des Schwellwertes der Änderungsrate des Wertes der physikalischen Größe erzeugten ersten Ausgangssignals (7), unverzüglich und unabhängig von der aktuell vorgesehenen Messrate, Versorgen des zweiten Bauteils (4) mit Energie, um einen aktuellen Wert der physikalischen Größe über das zweite Ausgangssignal (11) zu erfassen und in dem Speicher der Steuereinheit (2) zu hinterlegen,
- beim Überschreiten eines Schwellwertes einer Änderungsrate zuvor erfasster und in dem Speicher (10) hinterlegter Werte der physikalischen Größe Anpassen der Messrate durch die Steuereinheit (2).

11. Verfahren nach Anspruch 10, bei dem die in dem Speicher (10) hinterlegten Werte der physikalischen Größe zu vorgegebenen Zeitpunkten und/oder auf Anfrage von der Steuereinheit (2) an eine übergeordnete Auswerteeinheit übertragen werden, insbesondere an eine cloudbasierte Auswerteeinheit.

12. Verwendung wenigstens einer Vorrichtung (1) gemäß einem der Ansprüche 1 bis 6, vorzugsweise einer Vielzahl solcher Vorrichtungen (1), zur Überwachung einer fluiddurchströmten Rohrleitung.

13. Computerprogrammprodukt, umfassend Befehle, die die Steuereinheit (2) eines der Ansprüche 10 oder 11 veranlassen, die Schritte eines der Ansprüche 10 oder 11 auszuführen.

## Claims

1. Apparatus (1) for detecting changes in a value of a physical variable in a pipeline network, comprising:
- a first component (3) which is designed so as to generate a first output signal (7) when a threshold value of a rate of change of the value of the physical variable is exceeded,
- a second component (4) which is designed so as to determine the value of the physical variable and to generate a corresponding second output signal (11),
- a control unit (2) which has a microprocessor (9) that is designed so as to process predefined commands, a memory (10) and an energy supply (5) which is designed so as to supply the second component (4) with energy, wherein the control unit (2) is connected to the first component (3) and the second component (4) by cable or wirelessly and is designed to read out the first output signal (7) and the second output signal (11),
wherein the control unit (2) is designed so as to detect the value of the physical variable at a customisable measurement rate, in that the control unit (2) supplies the second component (3) with energy in accordance with the specified measurement rate, and to store the value which is detected via the second output signal (11) in the memory (10) of the control unit (2) in each case,
**characterised in that**
the control unit (2) is designed so as to supply the second component (4) with energy immediately in response to receiving the first output signal (7) and regardless of the presently specified measurement rate, in order to detect a present value of the physical variable via the second output signal (11) and store it in the memory (10),
and that the control unit (2) is designed so as to adjust the measurement rate when a threshold value of a rate of change of previously detected values of the physical variable stored in the memory (10) is exceeded.

2. Apparatus (1) according to claim 1, which is designed so as to transfer the values of the physical variable stored in the memory (10) to a higher-level evaluation unit at predefined points in time and/or on request, in particular to a cloud-based evaluation unit.

3. Apparatus (1) according to one of the preceding claims, wherein the first component is designed so as to generate an electrical voltage as the first output signal (7) when the threshold value of the rate of change of the value of the physical variable is exceeded due to an effect of force applied to the first component (3) by the physical variable.

4. Apparatus (1) according to claim 3, wherein the threshold value of the rate of change of the value of the physical variable is five bar per second, wherein the physical variable represents a pressure, in particular a pressure of a fluid in a pipeline.

5. Apparatus (1) according to claim 3 and 4, wherein the first component (3) is ring-shaped.

6. Apparatus (1) according to one of the preceding claims, wherein the second component (4) is a pressure sensor for detecting a pressure as a physical value.

7. Pipeline through which a fluid can flow and which has at least one apparatus (1) according to one of claims 1 to 6, wherein the apparatus (1) is arranged in the pipeline in such a way that the first component (3) can detect a rate of change of a pressure of the fluid and the second component (4) can detect the value of the pressure of the fluid in the pipeline.

8. Pipeline according to claim 7, which has a plurality of apparatuses (1) according to one of claims 1 to 6.

9. Detection system, comprising a plurality of apparatuses (1) according to one of claims 1 to 6, which are connected to one or more higher-level evaluation units, wherein the apparatuses (1) are preferably arranged in a pipeline according to claim 8 or 9.

10. Method for detecting, in a pipeline network, changes in a value of a physical variable using an apparatus (1), the apparatus (1) comprising:
- a first component (3) which is designed so as to generate a first output signal (7) when a threshold value of a rate of change of the value of the physical variable is exceeded,
- a second component (4) which is designed so as to determine the value of the physical variable and to generate a corresponding second output signal (11),
- a control unit (2) which has a microprocessor (9) that is designed so as to process predefined commands, a memory (10) and an energy supply (5) which is designed so as to supply the second component (4) with energy, wherein the control unit (2) is connected to the first component (3) and the second component (4) by cable or wirelessly and is designed for this purpose,
the method comprising:
- detecting the value of the physical variable at a measurement rate specified by the control unit (2), in that the control unit (2) supplies the second component (4) with energy in accordance with the specified measurement rate and stores the value which is detected via the second output signal (11) that is generated by the second component (4) in the memory (10) of the control unit (2) in each case,
- in response to receiving a first output signal (7) that is generated by the first component (3) when the threshold value of the rate of change of the value of the physical variable is exceeded, immediately and regardless of the presently specified measurement rate, supplying the second component (4) with energy in order to detect a present value of the physical variable via the second output signal (11) and to store it in the memory of the control unit (2),
- the control unit (2) adjusting the measurement rate when a threshold value of a rate of change of previously detected values of the physical variable stored in the memory (10) is exceeded.

11. Method according to claim 10, wherein
the values of the physical variable stored in the memory (10) can be transferred from the control unit (2) to a higher-level evaluation unit at predefined points in time and/or on request, in particular to a cloud-based evaluation unit.

12. Use of at least one apparatus (1) according to one of claims 1 to 6, preferably of a plurality of such apparatuses (1), to monitor a pipeline through which fluid flows.

13. Computer program product, comprising commands which cause the control unit (2) in one of claims 10 or 11 to perform the steps in one of claims 10 or 11.

## Revendications

1. Dispositif (1) de détection de changements de la valeur d'une grandeur physique dans un réseau de canalisation, comportant :
- une première pièce (3), qui est constituée pour produire, si une valeur de seuil d'un taux de changement de la valeur de la grandeur physique est dépassée, un premier signal (7) de sortie,
- une deuxième pièce (4), qui est constituée pour déterminer la valeur de la grandeur physique et pour produire un deuxième signal (11) de sortie correspondant,
- une unité (2) de commande, qui a un microprocesseur (9), lequel est constitué pour élaborer des instructions données à l'avance, une mémoire (10) et une alimentation (5) en énergie, laquelle est constituée pour l'alimentation de la deuxième pièce (4) en énergie, dans lequel l'unité (2) de commande est connectée, par câble ou sans câble, à la première pièce (3) et à la deuxième pièce (4) et est constituée pour lire le premier signal (7) de sortie et le deuxième signal (11) de sortie,
dans lequel l'unité (2) de commande est constituée pour détecter la valeur de la grandeur physique avec un taux de mesure adaptable, par le fait que l'unité (2) de commande alimente en énergie la deuxième pièce (3) conformément au taux de mesure donné à l'avance et met respectivement dans la mémoire (10) de l'unité (2) de commande la valeur détectée par le deuxième signal (11) de sortie,
**caractérisé en ce que**
l'unité (2) de commande est constituée pour, en réaction à la réception du premier signal (7) de sortie, alimenter en énergie la deuxième pièce (4) sans retard et indépendamment du taux de mesure en cours prévu à l'avance, afin de détecter une valeur en cours de la grandeur physique de mesure, par l'intermédiaire du deuxième signal (11) de sortie et de la mettre dans la mémoire (10),
et **en ce que** l'unité (2) de commande est constituée pour adapter le taux de mesure, si une valeur de seuil du taux de changement des valeurs de la grandeur physique détectée auparavant est mise dans la mémoire (10).

2. Dispositif (1) suivant la revendication 1, qui est constitué pour transmettre à une unité d'évaluation supérieure hiérarchiquement, en particulier à une unité d'évaluation reposant sur le nuage, les valeurs mises dans la mémoire (10) de la grandeur physique à des instants donnés à l'avance et/ou sur demande.

3. Dispositif (1) suivant l'une des revendications précédentes, dans lequel la première pièce est constituée pour produire, si la valeur de seuil du taux de changement de la valeur de la grandeur physique est dépassée en raison de l'application d'une force appliquée par la grandeur physique à la première pièce (3), une tension électrique comme premier signal (7) de sortie.

4. Dispositif (1) suivant la revendication 3, dans lequel la valeur de seuil du taux de changement de la valeur de la grandeur physique est de cinq bar à la seconde, dans lequel la grandeur physique représente une pression, en particulier la pression d'un fluide dans une canalisation.

5. Dispositif (1) suivant la revendication 3 et 4, dans lequel la première pièce (3) est de constitution annulaire.

6. Dispositif (1) suivant l'une des revendications précédentes, dans lequel la deuxième pièce (4) représente un capteur de pression pour la détection d'une pression comme grandeur physique.

7. Canalisation, dans laquelle peut passer un fluide et qui a au moins un dispositif (1) suivant l'une des revendications 1 à 6, dans laquelle le dispositif (1) est monté dans la canalisation, de manière à ce que la première pièce (3) puisse détecter un taux de changement d'une pression du fluide et la deuxième pièce (4) la valeur de la pression du fluide dans la canalisation.

8. Canalisation suivant la revendication 7, qui a une pluralité de dispositifs (1) suivant l'une des revendications 1 à 6.

9. Système de détection, comprenant une pluralité de dispositifs (1) suivant l'une des revendications 1 à 6, qui sont connectés à une ou à plusieurs unités d'évaluation supérieures hiérarchiquement, dans lequel les dispositifs (1) sont montés de préférence dans une canalisation suivant la revendication 8 ou 9.

10. Procédé de détection, dans un réseau de canalisation, de changements de la valeur d'une grandeur physique par un dispositif (1), le dispositif (1) comprenant :
- une première pièce (3), qui est constituée pour produire, si une valeur de seuil d'un taux de changement de la valeur de la grandeur physique est dépassée, un premier signal (7) de sortie,
- une deuxième pièce (4), qui est constituée pour déterminer la valeur de la grandeur physique et pour produire un deuxième signal (11) de sortie correspondant,
- une unité (2) de commande, qui a un microprocesseur (9), lequel est constitué pour élaborer des instructions données à l'avance, une mémoire (10) et une alimentation (5) en énergie, laquelle est constituée pour l'alimentation de la deuxième pièce (4) en énergie, dans lequel l'unité (2) de commande est connectée, par câble ou sans câble, à la première pièce (3) et à la deuxième pièce (4) et est constituée à cet effet,
le procédé comprenant :
- détecter la valeur de la grandeur physique à un taux de mesure donné à l'avance par l'unité (2) de commande, par le fait que l'unité (2) de commande alimente en énergie la deuxième pièce (4) conformément au taux de mesure donné à l'avance et met respectivement dans la mémoire (10) de l'unité (2) de commande la deuxième valeur détectée par le signal (11) de sortie produit par la deuxième pièce (4),
- en réaction à la réception d'un premier signal (7) de sortie produit par la première pièce (3) au dépassement de la valeur de seuil du taux de changement de la valeur de la grandeur physique, alimenter en énergie la deuxième pièce (4) sans retard et indépendamment du taux de mesure en cours donné à l'avance, afin de détecter une valeur en cours de la grandeur de mesure, par l'intermédiaire du deuxième signal (11) de sortie, et la mettre dans la mémoire de l'unité (2) de commande,
- au dépassement d'une valeur de seuil d'un taux de changement de valeurs de la grandeur physique détectées auparavant et mises dans la mémoire (10), adapter le taux de mesure par l'unité (2) de commande.

11. Procédé suivant la revendication 10, dans lequel les valeurs mises dans la mémoire (10) de la grandeur physique sont transmises à des instants donnés à l'avance et/ou sur demande de l'unité (2) de commande à une unité d'évaluation supérieure hiérarchiquement, en particulier à une unité d'évaluation reposant sur le nuage.

12. Utilisation d'au moins un dispositif (1) suivant l'une des revendications 1 à 6, de préférence d'une pluralité de tels dispositifs (1) pour le contrôle d'une canalisation, dans lequel passe du fluide.

13. Produit de programme d'ordinateur, comprenant des instructions, qui font que l'unité (2) de commande de l'une des revendications 10 ou 11 exécute les stades de l'une des revendications 10 ou 11.
